# EUROPEAN PATENT APPLICATION

(11) **EP 4 438 632 A1**
(43) Date of publication of application: **02.10.2024**
(21) Application number: 23305433.7
(22) Date of filing: 29.03.2023
(51) Int. Cl.: C08F 6/16, C08F 14/22, F16L 11/04, C08F 2/22

(54) **POLYVINYLIDENE FLUORIDE FOR HIGH PURITY WATER SUPPLY APPLICATIONS**

(71) Applicant: ARKEMA FRANCE, 92700 Colombes (FR)
(72) Inventor: GOLDBACH, James, King Of Prussia (US); ROUSSELLE, Brice, Pierre-Bénite (FR); LABOUR, Thomas, Serquigny (FR); FIORIO, Gaelle, Pierre-Bénite (FR); BONNET, Anthony, Colombes (FR); ALLARD BRETON, Béatrice, Pierre-Bénite (FR); BRUEL, Stéphanie, Pierre-Bénite (FR)
(74) Representative: Arkema Patent

(57) **Abstract**

The invention relates to a process that results in a vinylidene fluoride polymer composition with a reduced level of residual impurities, notably total oxidizable carbon (TOC) and fluoride ions. Such improvements can be accomplished in a cost-effective manner through the combination of a polymer recipe that uses a low amount of or no surfactants and the isolation of the polymer, especially in a dewatering extruder. The invention also relates to the use of such a vinylidene fluoride polymer for conveying ultrapure water in high purity applications.

## Description

### Field of the Invention

The invention relates to a process that results in a vinylidene fluoride polymer composition with a reduced level of residual impurities, notably total oxidizable carbon (TOC) and fluoride ions (F⁻). Such improvements can be accomplished in a cost-effective manner through the combination of a polymer recipe and the use of a washing step, especially a dewatering extruder. The invention also relates to the applications of such a vinylidene fluoride polymer in high purity water supply applications.

### Background of the Invention

In the field of electronics, electronic components such as of the semiconductor type are cleaned with ultra-high purity water. This ultra-high purity water is generally conveyed by means of a distribution system comprising tubes, valves, connectors and elbows made of vinylidene fluoride polymer ("PVDF" or "polyvinylidene fluoride" or "vinylidene fluoride polymer" or "polymer").

For these applications, there are very important requirements regarding the purity of the polymers used, since the impurities present in the polymers can be released into the ultrapure water.

However, during the manufacture of the polymer, impurities such as ions, metals, or low molecular weight organic molecules are found to be trapped in the polymer.

Fluoropolymers are generally made by an aqueous dispersion process, which provides a suitable heat sink for controlling the heat of polymerization and can produce a high yield and high molecular weight. To achieve stable dispersion or emulsion, a suitable surfactant or emulsifier must be employed. Fluoro-surfactants are generally used because they can yield stable particles and high molecular weight fluoropolymers. However, the fluorinated-surfactants typically used in emulsion polymerization of fluoropolymers, such as the ammonium salt of perfluoro octanoic acid or salts of perfluoro sulfonic acids are expensive and present an environmental concern related to bio-persistence. Further, they can decompose during melt processing adding unwanted color to the polymer. It is therefore desired to reduce or minimize the amount of fluorosurfactant that remains within the final solid polymer products.

Some non-fluorinated surfactants can also be used for polymerization of fluoropolymers. These surfactants do not have the same environmental concerns as fluorosurfactants, but they contribute to the residual Total Oxidizable Carbon (TOC) content in the polymer. This is undesirable for high-purity water supply applications mentioned above. In these cases, it is therefore desired to reduce or minimize the amount of TOC due to non-fluorinated surfactant that remains with the final solid polymer products.

Dewatering extrusion has been used for emulsion polymers, and combines the steps of coagulation, washing, dewatering and venting/degassing in a single, twin-screw extruder unit operation. The document EP 2548897 discloses the use of a dewatering extruder, with a steam coagulation step, providing an effective means for the isolation of solid fluoropolymer from an aqueous dispersion or suspension, and the resulting fluoropolymer contains extremely low levels of fluorosurfactant.

However, the above methods do not enable sufficient removal of the impurities present in the vinylidene fluoride polymers. There is therefore a real need for a process for producing vinylidene fluoride polymers that provides the means to ensure more efficient removal of impurities, and in particular low molecular weight impurities, such as ions or organic compounds (TOCs).

### Summary of the Invention

The invention relates in the first place to a process for reducing TOC and ionic impurities, such as fluorides, during polymerization, washing, drying and extrusion of a vinylidene fluoride polymer, said process comprising the steps of:
a) Polymerizing vinylidene fluoride monomer using less than 0.1% by weight of a fluorosurfactant, and/or less than 5% by weight of a non-fluorosurfactant, based on the weight of the vinylidene monomer, to produce an aqueous polyvinylidene fluoride (PVDF) composition in the form of an emulsion ;
b) Feeding said aqueous PVDF composition into a finishing system in which coagulation, washing, drying and extrusion occur, and could be obtained by a one-step dewatering extrusion process, to produce a solid PVDF composition having a TOC level lower than 20000 µg per m² of polymer and a fluoride (F⁻) ion level lower than 10000 µg per m² of polymer, according to SEMI F40 standards.

All stages of step b) can be realized into a unique finishing system such as a dewatering extruder.

The solid PVDF composition obtained by using the process according to the invention has a TOC level lower than 20000 µg per m² of polymer in the form of an extruded or molded part and a fluoride (F⁻) level lower than 10000 µg per m² of the same polymer form, as determined by test method semi F40.

The invention further relates to a polyvinylidene fluoride composition, said composition having a TOC level lower than 20000 µg per m² of polymer and a fluoride (F⁻) level lower than 10000 µg per m² of polymer.

According to certain embodiments, the above vinylidene fluoride polymer is obtained according to the method detailed herein.

According to certain embodiments, the polymer is in the form of granules or powder.

The invention also relates to a fluid conveyance part comprising or consisting of the polymer as indicated here above or formed from the powder or granules as indicated here above.

The invention also relates to the use of the above part for conveying ultra-high purity water for the cleaning of electronic components.

The present invention makes it possible to meet the need identified here above. It more particularly provides an improved recipe and process which makes it possible to obtain a vinylidene fluoride polymer that exhibits excellent purity by allowing for more efficient removal of the impurities contained in the polymer, and in particular of organic compounds as well as fluoride anions, without degrading the mechanical properties of the polymer. This results in the obtaining of a good quality polymer, exhibiting good mechanical properties and having a high level of purity, thereby making it possible to limit the release of these impurities during the subsequent use of this product (for example during the use of a tube or pipe made from the polymer according to the invention for the conveyance of ultra-high purity water).

The term "ultra-high purity water" is understood to refer to water having a maximum content of metallic and anionic impurities of 0.1 parts per billion (ppb) by weight, a total organic carbon (TOC) content of 10 ppb or less by weight, a non-volatile residues content of 0.1 parts per million (ppm) or less by weight, a resistivity of 18 MQ.cm at 25°C or more, and a content level of reactive silica impurities that is less than 1 ppb, in accordance with the standard SEMI F 63.

This is accomplished through the combination of a specific polymerization recipe and the use of a finishing system allowing separate coagulation, washing, drying and extrusion processes, that preferentially are intensified into a one-step twin-screw dewatering extruder to produce a solid, dried polyvinylidene fluoride composition having a low level of impurities, from an aqueous-based PVDF suspension or dispersion.

### Brief Description of the Figures

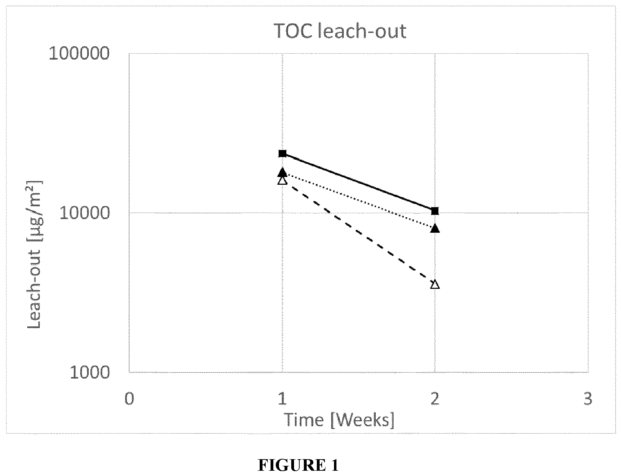

Figure 1 represents a diagram showing the comparison of TOC release into leach out water, after 1 or 2 weeks of leach out from various recipes and finishing processes, processed according to SEMI F40 protocol, limits determined by SEMI F57-0.622 norm.

### Detailed Description of the Invention

According to a first aspect, the invention relates to a process for reducing TOC and ionic impurities, notably F⁻, during polymerization, washing, drying and extrusion of a vinylidene fluoride polymer, comprising the steps of:
a) Polymerizing vinylidene fluoride monomer using less than 0.1% by weight of a fluorosurfactant, and/or less than 5% by weight of a non-fluorosurfactant, based on the weight of the vinylidene monomer, to produce an aqueous polyvinylidene fluoride (PVDF) composition in the form of an emulsion ;
b) Feeding said aqueous PVDF composition into a finishing system in which coagulation, washing, drying and extrusion occur, and could be obtained by a one step dewatering extrusion process, to produce a solid PVDF composition having a TOC level lower than 20000 µg per m² of polymer and a fluoride (F⁻) ion level lower than 10000 µg per m² of polymer, according to SEMI F40 standards.

According to various embodiments, said process includes the following features, where applicable combined.

Unless stated otherwise, all percentages are weight percent, and all molecular weights provided are weight average molecular weights.

The term "PVDF" employed here comprises vinylidene fluoride (VDF) homopolymers or copolymers of VDF and of at least one other comonomer in which the VDF represents at least 50 % by weight, the comonomer being chosen from chlorotrifluoroethylene, hexafluoropropylene, trifluoroethylene, vinyl fluoride, perfluoro methyl vinylether, perfluoro ethyl vinylether and tetrafluoroethylene.

Preferably, the fluoropolymer is polyvinylidene fluoride homopolymer and/or a copolymer of vinylidene fluoride with hexafluoropropylene in which the level of HFP is less or equal to 30% by weight.

### Polymerization Reaction (step a)

According to one embodiment, the polymerization reaction may occur in a batch, semi-batch or continuous polymerization process. The reactor is a pressurized polymerization reactor equipped with a stirrer and heat control means. The temperature of the polymerization can vary between 35° and 100°C. The pressure of the polymerization is typically between 1380 and 17300 kPa for PVDF polymerization, but it can be higher if the equipment permits operation at higher pressure. The pressure is most conveniently between 3450 and 9000 kPa.

According to one embodiment, in an emulsion polymerization process, vinylidene fluoride is polymerized in aqueous media using less than 0.1% by weight of a fluorosurfactant, and/or less than 5% by weight of a non-fluorosurfactant, preferably using less than 0.01 weight percent of non-fluorosurfactant, based on the weight of the vinylidene monomer, to produce an aqueous polyvinylidene fluoride composition in the form of an emulsion.

According to one embodiment, in the emulsion polymerization process, vinylidene fluoride is polymerized without using any surfactant, meaning that there is less than 0.001% by weight and advantageously 0% by weight of surfactant, either fluorosurfactant or non-fluorosurfactant.

The reactor and contents are heated to the desired temperature and vinylidene fluoride monomer, and optionally other materials are added, such as but not limited to, chain transfer agents, buffers or antifoulants. When the desired reaction pressure is reached, a radical initiator is introduced to start polymerization and maintain the reaction.

After a given amount of monomer fed, all feeds are stopped, and the reaction is considered to be completed. Residual gases (containing unreacted monomer) are vented and the latex is recovered from the reactor.

In the polymerization process, the monomer, initiator, optional emulsifier and other materials could be added all upfront prior to polymerization, fed continuously during the polymerization, fed partly before and then during polymerization, or fed after polymerization started and progressed for some time.

The radical initiator, or mixture of initiators, is a low TOC contributor, notably selected from the persulfate family including those examples bearing inorganic counter ions such as ammonium, sodium, or potassium. These compounds are added at a level sufficient to maintain a sufficient polymerization rate, typically in an amount from 10 ppm to 10,000 ppm versus total monomer, preferably from 100 ppm 2,000 ppm, and most preferably from 150 ppm to 1,500 ppm.

The optional surfactants of the invention can be fluorinated, non-fluorinated, or a mixture thereof. "Fluorinated surfactant" and "fluorosurfactant" as used herein means that the main surfactant chain contains at least one covalently bonded fluorine atom whereas in the present invention non-fluorinated surfactants means that there are no covalently-bonded fluorine atoms on the main chain.

Useful fluorosurfactants include, but are not limited to, salts of the acids of the formula X (CF2)nCOOM, wherein X is hydrogen or fluorine, M is an alkali metal, ammonium, substituted ammonium (e.g., alkylamine of 1 to 4 carbon atoms), or quaternary ammonium ion, and n is an integer from 6 to 20; sulfuric acid esters of polyfluoroalkanols of the formula X (CF2)nCH2OSO3M, where X and M are as above; and salts of the acids of the formula CF3(CF2)n(CX2)mSO3M, where X and M are as above; n is an integer from 3 to 7, and m is an integer from 0 to 2, such as in potassium perfluoroctyl sulfonate.

The optional non-fluorosurfactant is a surface-active agent that does not contain any carbon-fluorine covalent bonds and are ubiquitous to those skilled in the art and genrealy defined as a molecular structure containing a hydrophilic part and a hydrophobic part. These materials find broad usage as cleaning agents and emulsion stabilizers due to their ability to reduce the surface tension of a liquid, often water, via preferential segregation and molecular orientation at a solid/liquid or gas/liquid interface. Examples of the identity and physical properties of such materials can be found in: Handbook of Surfactants, M.R. Porter, Springer, New York, N, 1991; and Critical Micelle Concentrations of Aqueous Surfactant Systems, P. Mukerjee and K. J. Mysels, United States Bureau of Standards Publication NSRDS-NBS 36, 1971. As such, all classes of surfactants are considered here including ionic (anionic and cationic), non-ionic, polymeric, bio-based, Zwitterionic and those with specialized structures such as gemini surfactants. Of particular interest are those known to be effective in vinylidene fluoride emulsion polymerization, such as those described in: US8080621B2, US8158734B2, US8338518B2, US8765890B2, US9068071B2, US8697822B2, US7122610B2, and US9447256B2 largely of the classes of materials considered as alkylene oxide polymers and alkylene oxide block copolymers as well as acid/ionizable group containing polymeric surfactants and alkyl sulfonates.

In one embodiment of the invention, the total amount of surfactant used is less than 1 wt% vs. water introduced into the reactor.

In one embodiment of the invention, zero surfactant is added to the polymerization process.

The emulsion formed by the process of the invention generally has a solids level of from 5 to 65 weight percent, preferably from 10 to 55 weight percent as measured by drying of the dispersion and gravimetry. The fluoropolymer particles in the dispersion have a particle diameter in the range of 30 to 600 nm, and preferably from 100 - 350 nm measured by dynamic light scattering. The latex can be defined as stable when the particle diameter distribution is monodispersed around a mean value from 100-350 nm.

The solids level in the stable emulsion produced in the invention is greater than 24 weight percent, preferably greater than 26 weight percent, more preferably greater than 28 weight percent, more preferably greater than 30 weight percent, and even more preferably greater than 32 weight percent.

The vinylidene fluoride polymer to be purified comprises at least one impurity.

The at least one impurity may originate from the medium and from the conditions of polymerization of the monomer during the manufacture of the final polymer

In one embodiment, the one or more impurity(ies) may be organic compounds, such as alcohols, aldehydes, carboxylic acids and/ or esters and/ or carbonates

According to one embodiment, the at least one impurity is represented by organic compounds and ionic impurities, such as anions, preferably fluoride anions (F⁻).

The quantity of organic compound impurities may be determined by performing a measurement of the "total organic carbon" (or TOC). The quantity of organic compounds as well as that of fluoride anions is thus determined using the following standards. The preparation of samples is carried out according to the standard SEMI F40-0621, in which 50 g of polymer is placed in a jar containing 100 mL of ultra-pure water and then put in an oven at 85°C for a period of 7 days. A second test of 7 days can be performed according to SEMI F40-0621: at completion of a first period of 7 days in ultra-pure water at 85°C, the test fluid is drained and analyzed, the jar is replenished with 100 mL of fresh ultra-pure water, then put in an oven at 85°C for a second period of 7 days, finally the test fluid is drained and analyzed. The organic compounds and fluoride anions present in the wash waters (after the 1^{st} week and then after the second week) are then analyzed according to the standard test methods ASTM D4327 as for the measurement of fluoride anions, and ASTM D4779 and D5904 as for the measurement of organic compounds. A control water sample that has not been exposed to any polymers is used for reference. The values obtained are then converted into µg/m² equivalent according to the standard SEMI C69-1015. The measurement is preferably carried out on the polymer in the form of granules, but it may also be carried out on the polymer that is in the form of a powder, pressed into a part. When the polymer is in the form of a part (in particular a molded part), it is possible to cut one or more parts into fragments before performing the measurement.

### Finishing step (step b)

Following polymerization, the PVDF emulsion, dispersion or suspension is pumped into a finishing process to isolate the PVDF solids.

According to one embodiment, the finishing process is a standard finishing process, comprising the following steps:
i/ coagulates and aerates the latex obtained by emulsion polymerization:
   the latex continuously feeds a rig where suspended latex particles are agglomerated (flocculated) into bigger aggregates. A high-speed agitation is ensured, and air under pressure is injected. At the outlet, a solid-like foam is obtained. The basic role of the unit is to produce buoyant polymer particles for the wash column operation.
ii/ washes the latex to remove residual molecules:
   agglomerated flocs of aerated polymer are carried to a column, where they are washed by a co or a countercurrent of de-ionized water. For example, foam flocs rise in the column, and go out with an excess of water at the top or the bottom, whereas water containing impurities is removed at the bottom or the top.
iii/ spray dries the washed polymer to produce PVDF powder:
   washed foam is atomized by high-pressure hot air in a nozzle. Flows are co-current, and temperature at outlet are regulated to achieve complete drying. Purified polymer powder is then ready to be processed.
iv/ extrudes the powder to form pellets:
   powder is fed into a twin-screw extruder. Due to shear rate and temperature control, the polymer is melted and cut into pellets, before cooling down step.

According to one embodiment, the finishing process is performed using a dewatering extruder. The dewatering extruder combines the steps of coagulation, washing, dewatering and venting/degassing in a single, twin-screw extruder unit operation.

This extruder and screws are of the same general type as described in the document US 4,148,991. The preferred design is a counter-rotating non-intermeshing screw design. For production purposes, for example, the screws can have an outer diameter of 50 mm to 250 mm and a screw length of 35-80 times the screw diameter (35-80D) depending on the number of dewatering stages.

The twin screw extruder generally has an open forward-flighted screw design to carry material towards the exit of the screw. The exception to this are several "seal" or "restrictor" sections which divide the extruder typically into 3-5 zones of operation. These "seal" or "restrictor" elements can be either a) non-flighted elements b) forward flighted elements, or c) reverse-flighted elements.

### Purified Vinylidene Fluoride Polymer

According to a second aspect, the invention relates to a polyvinylidene fluoride composition, said composition having a TOC level lower than 20000 µg per m² of polymer and a fluoride (F⁻) level lower than 10000 µg per m² of polymer according to SEMI F40 analytical standards, that can be repeated 2 times.

According to various embodiments, said PVDF composition includes the following features, where applicable combined.

In one embodiment of the invention, the level of TOC in said PVDF composition is lower than 10000 µg/m², preferentially lower than 5000 µg/ m², according to SEMI F40 analytical standards.

In one embodiment of the invention, the level of F⁻ ions in said PVDF composition is lower than 5000 µg/m², preferentially lower than 2000 µg/m², according to SEMI F40 analytical standards.

It may be in any suitable form, such as in the form of granules, pellets, or in the form of a powder, or in the form of a molded part, for example in its final form, and in particular in the form of tubes or pipes. It is an inventive feature of these articles that they exhibit very low total organic carbon and fluoride extraction into ultra-high purity water.

In one embodiment of the invention, the level of TOC in said PVDF composition is higher than 1500 µg per m² of polymer.

In one embodiment of the invention, the level of F⁻ ions in said PVDF composition is higher than 500 µg per m² of polymer.

The content levels of organic compounds and fluoride anions are measured using the method as described here above.

Thus, the polymer according to the invention has a reduced content of impurities (without degradation of the polymer's mechanical properties), which makes it possible to subsequently limit the release of impurities, that is to say at the time of use of the product. The mechanical properties include, for example, temperature of thermal degradation, melting temperature, crystallization temperature, weight loss at high temperature (for example 270°C), crystallinity index, tensile strength, elongation at break and elongation at yield.

In one embodiment of the invention, said PVDF composition is a solid composition obtained by the process according to the invention. This solid composition has a low level of water soluble or water immiscible impurities. The impurities notably include TOC and F⁻ ions.

Extruded pipe extractable TOC is very low, 5 times lower than current SEMI F57-0622 norm. Extruded pipe extractable fluoride ion is high for 1^{st} wash, but very low after the 2^{nd} wash (8 times lower than current SEMI F57-0622 norm).

The process of the invention for the production of high-purity PVDF has several advantages over the reaction and finishing processes of the art:
a) The PVDF produced has a very low level of water-soluble or water-miscible impurities, and in particular lower levels of TOC and F⁻ ions;
b) A single unit operation replaces a series of more complicated operations;
c) A PVDF pellet can be produced without going through a powder stage.
d) Coagulation and isolation can be done without the use of coagulants - resulting in a more pure, less contaminated product.

The high-purity PVDF according to the invention may be used in particular for the manufacture of parts, in particular tubes, valves, connectors or elbows, for conveying very high purity water for cleaning electronic components (such as semiconductor compounds).

### Examples

The following examples illustrate the invention without any limitation thereof. Leach out waters purity after one and two weeks are compared (SEMI F40 protocol, limits determined by SEMI F57-0.622 norm).

Figure 1 represents a diagram showing the comparison of TOC release into leach out water from various recipes and processes, after 1 and 2 weeks, where the symbols are as indicated below:
- 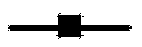 represents the leach out results from a pipe made of a PVDF Suspension
- 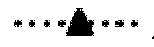 represents the leach out results from a pipe made of a PVDF Emulsion polymerization with a recipe using fluorosurfactant as described in EP2548897B, examples 7-10, and a one-step finishing process dewatering extruder (hereinafter called "old recipe"). The detailed description of the process is done into examples 7-10. The first step is to manufacture a PVDF by emulsion polymerization, using C4-C12 perfluoroalkane sulfonic acid salt surfactant. The emulsion is then introduced into a counter-rotating non-intermeshing twin-screw extruder with screws having outer diameters of 30mm and a total screw length of 78 diameters (2.3368 m). The extruder configuration is described by Figure 1 of EP2548897B. The extruder barrel surfaces and screws were made of high nickel alloy metals. High-purity DI water was used for all process streams. The molten polymer was discharged from the extruder into a strand die. The polymer strands were in a water bath and cut into pellets.
- 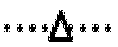 represents the leach out results from a pipe made of a PVDF Emulsion with a recipe according to the invention (hereinafter called "new recipe", as described in the step a/ above with the use of the dewatering extruder for finishing step b). The first step is to obtain a PVDF by emulsion polymerization, without any surfactant, using an ammonium persulfate solution as initiator. The emulsion is then introduced into a counter-rotating non-intermeshing twin-screw extruder with the same configuration than previous example. The extruder barrel surfaces and screws were made of high nickel alloy metals. High-purity DI water was used for all process streams. The molten polymer was discharged from the extruder into a strand die. The polymer strands were in a water bath and cut into pellets.
- 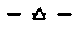 represents the leach out results from a pipe made of a PVDF Emulsion with the recipe as described on the step a/ of this document, with the use of the standard multi-step finishing process for finishing step b. In this case, the polyvinylidene fluoride emulsion, without using any surfactant with the same recipe than into previous example, is processed through a conventional isolation process consisting of: Filtration, coagulation by mechanical shear, water washing, decanting, spray drying, and extrusion to form pellets. High-purity DI water was used for all process streams.

Figure 1 shows that by using the recipe described as step a/ in this document, with the one step b/ finishing process, a significant lower TOC level is observed, by comparison to previous recipe with same finishing step or PVDF resin with suspension process. This is true with the 2 types of finishing steps. Especially after 2 weeks of leach out, TOC have been reduced by almost a factor 5 compared to emulsion previous recipe values, to finally be at a very low of TOCs concentration.

### Reduction of F⁻ over leach out time

The table 1 below shows the evolution of Fluorides concentration into waters after the 1^{st} and the 2^{nd} week of leach out, and the calculation of fluorides reduction rate between week 1 and week 2. Results are obtained by using SEMI F40 method on pipes extruded from PVDF pellets samples, and presented into µg/m². In one embodiment, a polymerization process as described in US2435537A or US3193539A is used to prepare the samples in the last column of Table 1.

**Table 1**

| Pipes | PVDF Emulsion Old recipe One-step finishing | PVDF Emulsion New recipe One-step finishing | PVDF Emulsion New recipe Multistep finishing | PVDF Suspension |
|---|---|---|---|---|
| Week | Fluoride | Fluoride | Fluoride | Fluoride |
| 1 | 4200 | 6500 | 5075 | 1900 |
| 2 | 2400 | 650 | 1160 | 630 |
| **Fluorides Reduction between week 1 and week 2** | **43%** | **90%** | **77%** | **67%** |

This table shows the big improvement on residual F⁻ into leach out waters after 2 weeks of leach out, obtained with the "new" recipe, described as step a/ in this document, compared to "old" recipe (as described into Prior art EP254889). This reduction is valuable for both step b finishing processes.

This improvement is achieved thanks to the better kinetics of fluoride transfer into leach out waters for the "new" recipe, compared to "old" recipe and suspension PVDF. This is particularly true for the one step finishing results.

## Claims

1. A process for reducing Total Oxidizable Carbon (TOC) and ionic impurities, such as fluoride (F⁻) ions, during polymerization, washing, drying and extrusion of a vinylidene fluoride polymer, comprising the steps of:
a) polymerizing a vinylidene fluoride monomer in aqueous media using less than 0.1% by weight of a fluorosurfactant, and/or less than 5% by weight of a non-fluorosurfactant, based on the weight of the vinylidene monomer, to produce an aqueous polyvinylidene fluoride (PVDF) composition in the form of an emulsion;
b) feeding said aqueous PVDF composition into a finishing system in which coagulation, washing, drying and extrusion occur, and could be obtained by a one-step dewatering extrusion process, to produce a solid PVDF composition having a TOC level lower than 20000 µg per m² of polymer and a fluoride (F⁻) ion level lower than 10000 µg per m² of polymer, according to SEMI F40 standard.

2. The process of claim 1, wherein step a) is a batch, semi-batch or continuous emulsion polymerization process.

3. The process of claim 2, wherein sodium, ammonium or potassium persulfate is used as initiator, at a level from 100 ppm to 10,000 ppm versus total monomer, preferably from 250 ppm 2,000 ppm, and most preferably from 500 ppm to 1,500 ppm.

4. The process of any of claims 1 to 3, wherein no surfactant is used in step 1a.

5. The process of any of claims 2 to 4, wherein said finishing process in step b) is a standard finishing process, comprising the following steps:
i/ coagulates and aerates the latex obtained by emulsion polymerization:
ii/ washes the latex to remove residual molecules:
iii/ spray dries the washed polymer to produce PVDF powder:
iv/ extrudes the powder to form pellets.

6. The process of any of claims 2 to 4, wherein said finishing process in step b) is performed using a dewatering extruder.

7. The process of any of claims 1 to 6, wherein said solid PVDF composition has a TOC level lower than 10000 µg per m² of polymer and a fluoride (F⁻) ion level lower than 5000 µg per m² of polymer, according to SEMI F40 standards.

8. The process of any of claims 1 to 7, wherein said solid PVDF composition has a TOC level lower than 5000 µg per m² of polymer and is higher than 1500 µg per m² of polymer after 2 weeks of leach out, according to SEMI F40 standards.

9. The process of any of claims 1 to 8, wherein said solid PVDF composition has a fluoride (F⁻) ion level lower than 2000 µg/m² and is higher than 500 µg per m² of polymer after 2 weeks of leach out.

10. A polyvinylidene fluoride composition, said composition having a TOC level lower than 20000 µg per m² of polymer and a fluoride (F⁻) level lower than 10000 µg per m² of polymer.

11. The PVDF composition of claim 10, wherein the level of TOC in said PVDF composition is lower than 10000 µg/m², preferentially lower than 5000 µg/m² and is higher than 1500 µg per m² of polymer.

12. The PVDF composition of any of claims 10 or 11, wherein the fluoride (F⁻) ions is lower than 5000 µg/m², preferentially lower than 2000 µg/m², and is higher than 500 µg per m² of polymer.

13. A PVDF according to any of claims 10 to 12, that is in the form of granules.

14. An article comprising or consisting of the PVDF as claimed in any one of claims 10 to 12 or formed from the granules according to claim 13.

15. The use of the article as claimed in claim 14 for conveying ultra-high purity water for the cleaning of electronic components.
